Europäisches Patentamt

European Patent Office

Office européen des brevets

(11) Publication number: **0 111 909**
**B1**

# EUROPEAN PATENT SPECIFICATION

(45) Date of publication of patent specification: **07.03.90**

(21) Application number: **83112687.5**

(22) Date of filing: **16.12.83**

(51) Int. Cl.5: **H 04 N 7/18,** H 04 N 5/225, G 02 B 27/00, G 06 F 7/00

(54) **Picture processing apparatus.**

(30) Priority: **22.12.82 JP 223766/82**

(43) Date of publication of application:
**27.06.84 Bulletin 84/26**

(45) Publication of the grant of the patent:
**07.03.90 Bulletin 90/10**

(84) Designated Contracting States:
**DE FR GB**

(56) References cited:
**DE-A-3 231 810**
**US-A-3 505 465**

(73) Proprietor: **HITACHI, LTD.**
**6, Kanda Surugadai 4-chome Chiyoda-ku Tokyo (JP)**

(72) Inventor: **Kamejima, Kohji**
**2625-3 Shimoinayoshi Chiyoda-mura Niihara-gun Ibaraki-ken (JP)**
Inventor: **Yamamoto, Hiroshi**
**2625-3 Shimoinayoshi Chiyoda-mura Niihara-gun Ibaraki-ken (JP)**
Inventor: **Nakano, Yoshiyuki**
**1-10-53 Nishinarusawa-cho Hitachi-shi Ibaraki-ken (JP)**
Inventor: **Fujie, Masakatsu**
**531-328 Tagu Ushiku-machi Inashiki-gun Ibaraki-ken (JP)**
Inventor: **Iwamoto, Taro**
**433-47 Yonezawa-cho Mito-shi Ibaraki-ken (JP)**
Inventor: **Honma, Kazuo**
**3769-21 Ami, Ami-machi Inashiki-gun Ibaraki-ken (JP)**

(74) Representative: **Patentanwälte Beetz sen. - Beetz jun. Timpe - Siegfried - Schmitt-Fumian Steinsdorfstrasse 10 D-8000 München 22 (DE)**

Courier Press, Leamington Spa, England.

## Description

The present invention relates to a picture processing apparatus of the kind referred to in the preamble portion of patent claim 1. Such a picture processing apparatus is known from US—A—3 505 465.

In recent years, moving systems represented by a moving inspection robot, an intelligent robot etc. have been demanded for. For the moving systems of this type, it has become necessary to act within an environment whose situation is not perfectly grasped in advance.

An expedient for recognizing the ambient situation of the moving system has heretofore been such that the ambient situation is observed with a television camera or the like, and that an operator or a controlling computer forms a plan for the action of the moving system on the basis of a picture obtained by the observation. An example is the article "manipulator vehicles" in 'Proceedings of 24th conference on remote systems technology, 1976', pp. 196—218. A serious obstacle at the stage of information processing for the planning lies in the processing ability of the television camera. More specifically, the performance of the present-day television camera is much inferior to that of the human eye. For example, it is known that the human eye can process a picture of wide angle of view and that it can maintain a high resolution for an area worthy of special note. In order to realize these functions with the television camera, according to a prior art a lens of narrow angle of view is installed in compliance with a required resolution and changes the direction of the television camera thereby to scan the whole necessary field of view.

This measure however, inevitably rotates or turns the television camera of great weight over a large angle. It is therefore very difficult to process at high speed a picture corresponding to the whole field of view thus obtained. There is also a measure wherein a large number of television cameras facing in various directions within the whole field of view are disposed to the end of enhancing the picture processing speed. Since, with this measure, the moving system is equipped with the large number of television cameras, its weight increases much more, resulting in such problems that the cost rises and that the manoeuverability of the moving system degrades.

US—A—3 505 465 discloses a picture processing apparatus for processing an ambient environment as a picture, comprising view-field picture input means for receiving an actual picture of wide angle of view and delivering a distorted picture of wide angle of view corresponding to the actual picture, a correcting unit which corrects the distorted picture of wide angle of view from said view-field picture input means, into a proper picture of wide angle of view, and means for displaying the proper picture of wide angle of view from said correcting unit. The said correcting unit and displaying means are constituted by a viewing screen in a curved shape onto which the distorted image is projected and which eliminates in an optical manner the existing distortions.

It is the object of the present invention to improve the above described picture processing apparatus such that it can grasp an ambient situation over a wide range and at high speed.

According to the present invention this object is accomplished with a picture processing apparatus for processing an ambient environment as claimed in claim 1.

Dependent claims are directed on features of preferred embodiments of the invention.

Other advantages and features of the present invention will become more apparent from the following description of embodiments taken with reference to the drawings, in which

Figure 1 is a view showing a moving system which is furnished with an example of the apparatus according to the present invention;

Figure 2 is a circuit diagram showing the arrangement of a control unit which is used in the apparatus according to the present invention;

Figure 3 is an explanatory diagram showing the projective conversion operation of an optical system which is used in an apparatus according to the present invention;

Figure 4 is a flow chart showing the processing contents of the arithmetic unit shown in Figure 2;

Figure 5 is a diagram showing a picturized situation which is obtained with an apparatus according to the present invention;

Figures 6 to 8 are diagrams each showing drive means for a television camera which is used in an apparatus according to the present invention;

Figure 9 is a view showing a moving system which is furnished with another embodiment of the present invention; and

Figure 10 is a diagram showing the relationship between a picture on a monitor television set and the resolution thereof, the picture being obtained with the embodiment of the present invention shown in Figure 9.

Now, embodiments of the present invention will be described with reference to the drawings.

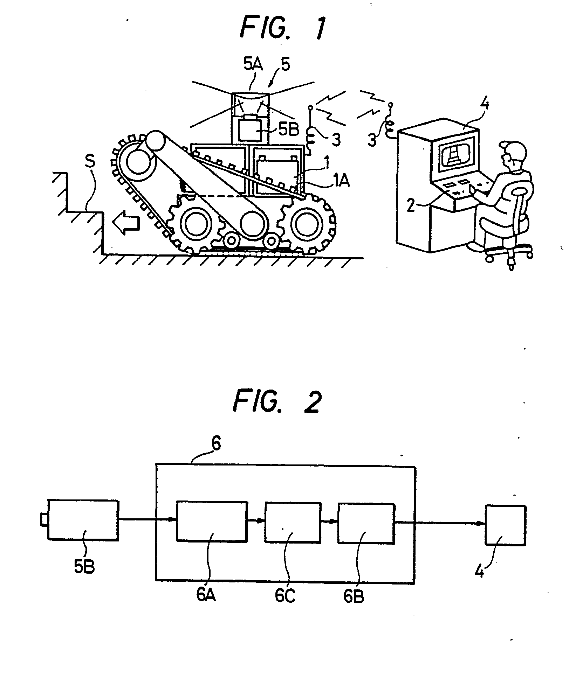

Figure 1 shows a moving system which is furnished with an apparatus according to the present invention. Referring to the figure, numeral 1 designates the moving system which can travel on a stairway S etc. In this example, the form of a moving object equipped with a crawler 1A is illustrated. Shown at numeral 2 is a console which is installed in a remote place or the like. This console 2 can manoeuver the moving system 1 by applying a manoeuvering signal to the moving system 1 by means of a transmitter-receiver 3. The console 2 is also provided with a monitor television set 4 which displays the view-field picture of a picture of wide angle of view to be described later. The aforementioned moving system is furnished with view-field picture input means 5. The picture of wide angle of view obtained with the view-field picture input means 5 is projected on the monitor television set 4 of the console 2 through the transmitter-receiver 3. As shown in Figure 1, the view-field picture input means 5 is constructed of a convex mirror 5A and a television camera 5B. Owing to the adoption of the convex mirror 5A, the picture of wide angle of view can be picked up by the television camera 5B.

Figure 2 shows a control circuit in an example of the apparatus of the present invention. In this figure, the same symbols as in Figure 1 indicate the same parts. Numeral 6 indicates an arithmetic unit which eliminates and compensates the distortion of a picture afforded by the convex mirror 5A. This arithmetic unit 6 is constructed of picture memory portions 6A, 6B and a computing circuit 6C. It is possible to install the arithmetic unit 6 on the moving system 1 or the console 2. The picture taken by the camera 5B is recorded in the picture memory portion 6A, while the picture with the distortion removed is recorded in the picture memory portion 6B. The computing circuit 6C performes a computation for compensating the distortion of the picture on the basis of a picture position on the convex mirror 5A.

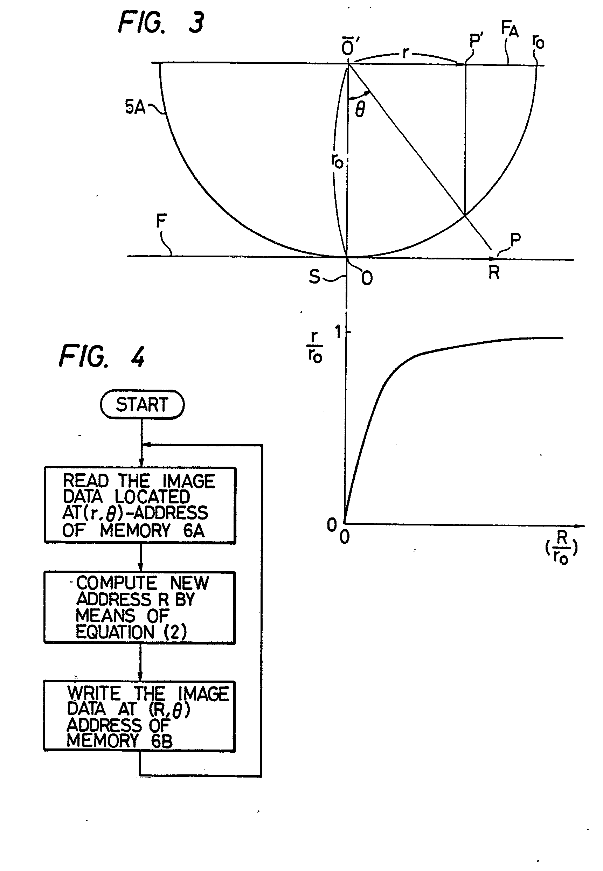

The processing function of the computing circuit 6C will be described with reference to Figure 3.

Figure 3 is an explanatory diagram showing a projective conversion operation by the convex mirror which is used in the apparatus of the present invention. In this figure, the convex mirror 5A projects an image OR within an infinitely extending plane F, on $F_A$ within a circle of radius $r_o$. The projection is done symmetrically with respect to an optic axis S. This signifies that, when the point P of the image OR within the plane F is expressed by a polar coordinate system $P = (R, \theta)$, the projection point $P'$ of the point P on the position $F_A$ is denoted by $(r, \theta)$ in the polar coordinate system. Here, $r$ satisfies the following relation of Equation (1) by way of example:

$$(r/r_o)^2 = \frac{(R/r_o)^2}{1 + (R/r_o)^2} \quad (1)$$

On the basis of Equation (1), the computing circuit 6C executes processing steps mentioned below. The flow chart of the processing is shown in Figure 4.

(1) The computing circuit reads image data located at the $(r, \theta)$ address of the picture memory portion 6A.

(2) It computes the following equation (2) obtained on the basis of the aforementioned equation (1):

$$R = r_o \sqrt{\frac{(r/r_o)^2}{1 - (r/r_o)^2}} \quad (2)$$

(3) It writes the image data at the $(R, \theta)$ address of the picture memory portion 6B.

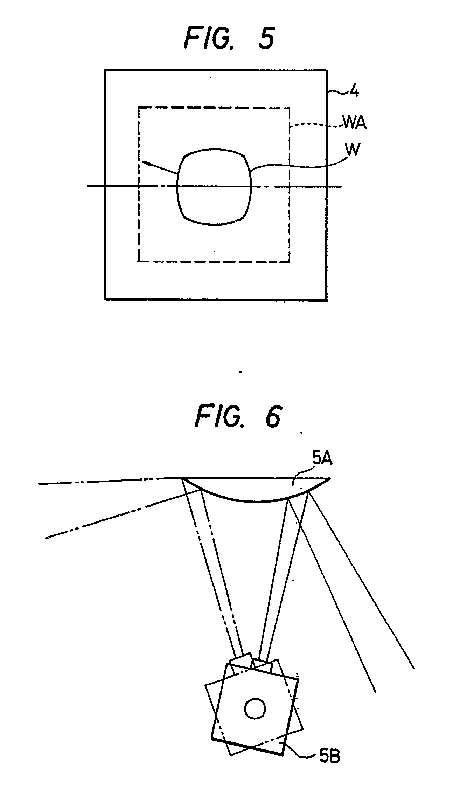

As shown in Figure 5, the picture obtained by the above processing is the proper picture WA into which the picked-up image W including the distortion has been corrected and which is displayed on the screen of the monitor television set 4. The ambient field of view of the moving system 1 can be grasped by directly viewing the picture WA on the screen of the monitor television set 4.

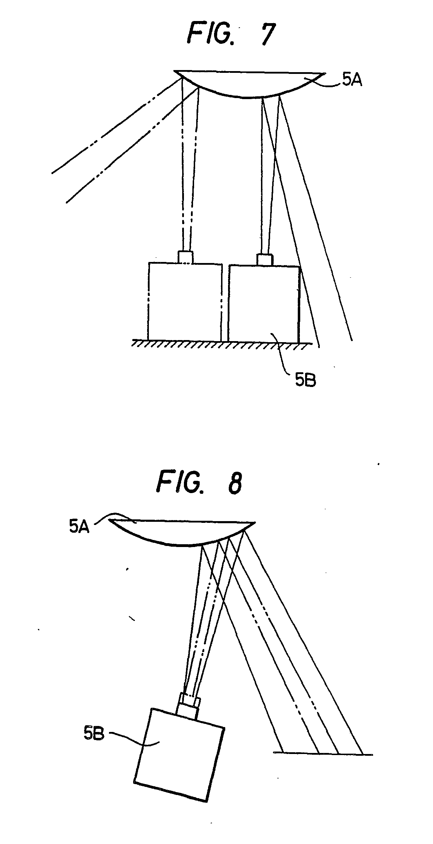

In the above embodiment, the case has been stated where the television camera 5B is held stationary relative to the convex mirror 5A in the view-field picture input means 5. In order to more enlarge the range of the field of view, however, the television camera 5B may well be constructed rockable relative to the convex mirror 5A as shown in Figure 6. Further, as shown in Figure 7, the television camera 5B may well be constructed movable rectilinearly relative to the convex mirror 5A and translated by an actuator. It is also possible to tilt or move the convex mirror 5A relative to the television camera 5B. Further, only the lens portion of the television camera 5B may well be moved as shown in Figure 8. It is also possible to combine these measures. Since drive means therefor can be readily realized, the details shall be omitted from the description. Moreover, only an area to be noted can be received in the whole field of view of the camera 5B by changing the focal length of the lens of the television camera 5B. The movement of the camera 5B and the adjustment of the focal length in series are executed in accordance with external instructions. The external instructions can be given as the operator's instructions by way of example.

It is to be understood that the apparatus can be realized with a mirror other than the convex mirror 5A, for example, a mirror of cone or polygonal pyramid or a mirror of circular or polygonal cylinder.

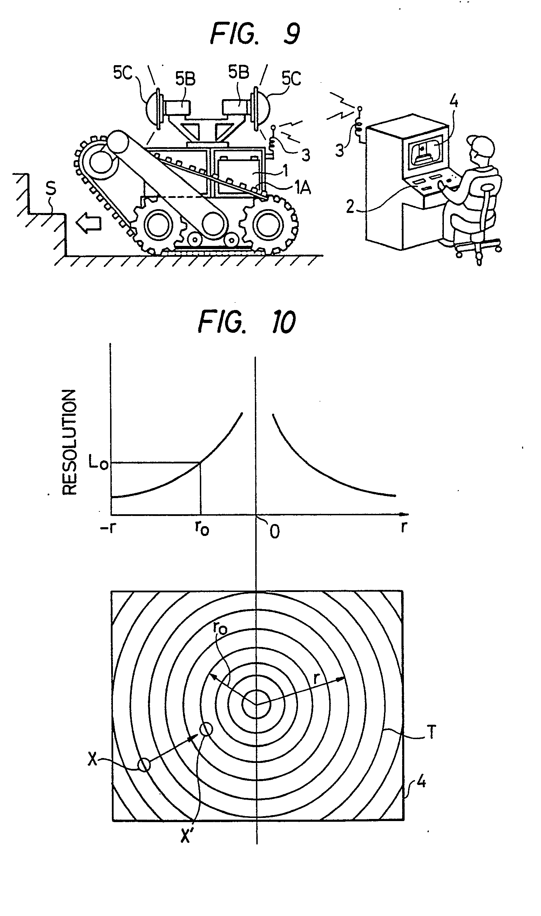

Figure 9 shows another example of the apparatus of the present invention. In this figure, the same symbols as in Figure 1 indicate the same portions. In this embodiment, the view-field picture input means 5 is constructed of fisheye lenses 5C and television cameras 5B. Also in case of this construction, the distorted picture of wide angle of view can be corrected into the proper picture which is displayed on the monitor television set, by the arrangement of the computing circuitry similar to that in the foregoing embodiment shown in Figure 1. In case of this embodiment, since the fisheye lens 5C is used, the picture obtained with the corresonding television camera 5B is more compressed in a part closer to a peripheral edge. This signifies that the resolution of the peripheral part of the picture degrades. In order to cope with this drawback, an area of which a high resolution is required may be picked up at the center of the screen at all times. However, grasping the subject area at the center of the screen at all times makes it necessary to frequency move the television camera 5B. An expedient for solving this problem will be described with reference to Figure 10. This figure shows the relationship between the picture on the monitor television set as afforded by the fisheye lenses and the resolution thereof. T on the picture indicates an equal resolution line, and X, X' indicate subject areas. It is now assumed that the area of which a resolution $L_o$ is required has been picked up at the position X on the screen. In this case, the computing circuitry computes the distance $r_o$ of the equal resolution line corresponding to the preset resolution $L_o$ and the television camera 5B is moved on the basis of the distance $r_o$ so that the area X may come to the position X' on $r_o$.

As described above in detail, according to the present invention, a picture of wide angle of view can be processed at high speed so as to provide a proper picture including no distortion. As a result, an ambient situation over a wide range can be grasped.

## Claims

1. A picture processing apparatus for processing an ambient environment as a picture, comprising viewfield picture input means (5) for receiving an actual picture of wide angle of view and delivering a distorted picture of wide angle of view corresponding to the actual picture, a correcting unit (6) which corrects the distorted picture of wide angle of view from said view-field picture input means, into a proper picture of wide angle of view, and means (4) for displaying the proper picture of wide angle of view from said correcting unit (6), characterized in that said correcting unit is an arithmetic unit (6) comprising a picture memory portion (6A) which stores the distorted picture of wide angle of view from said view-field picture input means, a computing circuit (6C) which produces the proper picture of wide angle of view by eliminating and compensating the distortion of the picture stored in said picture memory portion, and another picture memory portion (6B) which stores the distortion-less pictures produced by said computing circuit.

2. A picture processing apparatus according to claim 1, wherein said view-field picture input means (5) comprises an optical device (5A) which grasps the ambient environment as the picture of wide angle of view, and a television camera (5B) which is disposed in a manner to face an optic axis of said optical device so as to receive the picture of wide angle of view from said optical device.

3. A picture processing apparatus according to claim 2, wherein said optical device (5A) is a mirror which is convex toward said television camera (5B).

4. A picture processing apparatus according to claim 2, wherein said television camera (5B) is installed so as to be movable relative to said optical device.

5. A picture processing apparatus according to claim 2, wherein said television camera (5B) has only a lens portion thereof made movable relative to said optical device.

6. A picture processing apparatus according to claim 2, wherein said television camera has a variable focus.

7. A picture processing apparatus according to claim 2, wherein said optical device (5A) is a fisheye lens.

8. A picture processing apparatus according to claim 1, wherein said view-field picture input means (5) is installed on a moving object which moves within the environment, said arithmetic unit (6) and the picture display means (4) are installed at a position which is remote from the moving object, and said view-field picture input means and said arithmetic unit are coupled by communication means (3).

## Patentansprüche

1. Bildverarbeitungsvorrichtung zur Verarbeitung einer Umgebung in ein Bild, mit einer Blickfeld-Bilderfassungsvorrichtung (5) zum Erhalt eines tätsächlichen Weitwinkelbildes und Abgabe eines verzerrten Weitwinkelbildes entsprechend dem tatsächlichen Bild, einer Korrektureinheit (6), welche das verzerrte Weitwinkelbild der Gesichtsfeld-Bilderfassungsvorrichtung in ein genaues Weitwinkelbild korrigiert, und Mittel (4) zur Anzeige des genauen Weitwinkelbildes der Korrektureinheit (6), dadurch gekennzeichnet, daß die Korrektureinheit eine arithmetische Einheit (6) ist, mit einem Bildspeicherteil (6A), welches das verzerrte Weitwinkelbild der Blickfeld-Bilderfassungsvorrichtung speichert, einer Rechenschaltung (6C), welche das genaue Weitwinkelbild durch Beseitigung und Kompensation der Verzerrung des in dem Bildspeicherteil gespeicherten Bildes erzeugt, und einem weiteren Bildspeicherteil (6B), welches das von der Rechenschaltung erzeugte verzerrungsfreie Bild speichert.

2. Bildverarbeitungsvorrichtung nach Anspruch 1, dadurch gekennzeichnet, daß die Blickfeld-Bilderfassungsvorrichtung (5) eine optische Einrichtung (5A), welche die Umgebung als Weitwinkelbild erfaßt, und eine Fernsehkamera (5B) umfaßt, die so angeordnet ist, daß sie einer optischen Achse der optischen Einrichtung dergestalt gegenüberliegt, daß sie das Weitwinkelbild der optischen Einrichtung erfaßt.

3. Bildverarbeitungsvorrichtung nach Anspruch 2, dadurch gekennzeichnet, daß die optische Einrichtung (5A) ein Spiegel ist, der zu der Fernsehkamera (5B) hin konvex ist.

4. Bildverarbeitungsvorrichtung nach Anspruch 2, dadurch gekennzeichnet, daß die Fernsehkamera (5B) beweglich relativ zu der optischen Einrichtung eingebaut ist.

5. Bildverarbeitungsvorrichtung nach Anspruch 2, dadurch gekennzeichnet, daß nur das Objektiv der Fernsehkamera (5B) gegenüber der optischen Einrichtung beweglich ist.

6. Bildverarbeitungsvorrichtung nach Anspruch 2, dadurch gekennzeichnet, daß die Fensehkamera einen variablen Fokus aufweist.

7. Bildverarbeitungsvorrichtung nach Anspruch 2, dadurch gekennzeichnet, daß die optische Einrichtung (5A) ein Fischaugenobjektiv ist.

8. Bildverarbeitungsvorrichtung nach Anspruch 1, dadurch gekennzeichnet, daß die Blickfeld-Bilderfassungsvorrichtung (5) auf einem beweglichen Gegenstand angeordnet ist, welcher sich innerhalb der Umgebung bewegt, wobei die arithmetische Einheit (6) und die Bildanzeige (4) an einer von dem beweglichen Gegenstand entfernten Stelle angeordnet sind, und wobei die Blickfeld-Bilderfassungsvorrichtung und die arithmetische Einheit durch Übertragungsmittel (3) miteinander verbunden sind.

## Revendications

1. Dispositif de traitement d'images servant à traiter un environnement ambiant sous la forme d'une image, comprenant des moyens (5) d'introduction de l'image du champ d'observation, qui servant à recevoir une image réelle observée avec un grand angle d'observation et à délivrer une image déformée observée avec le grand angle d'observation et correspondant à l'image réelle, une unité de correction (6), qui corrige l'image déformée observée avec le grand angle d'observation à partir desdits moyens d'entrée de l'image du champ d'observation, et des moyens (4) servant à afficher l'image correcte observée avec le grand angle d'observation à partir de ladite unité de correction (6), caractérisé en ce que ladite unité de correction est une unité arithmétique (6) comportant une partie (6A) formant mémoire d'images, qui mémorise l'image déformée observée avec le grand angle d'observation et délivrée par lesdits moyens d'entrée de l'image du champ d'observation, un circuit de calcul (6C) qui produit l'image correcte observée avec le grand angle d'observation, moyennant une suppression et une compensation de la déformation de l'image mémorisée dans ladite partie formant mémoire d'images, et une autre partie (6b) formant mémoire d'images, qui mémorise l'image sans déformation, produite par ledit circuit de calcul.

2. Dispositif de traitement d'images selon la revendication 1, dans lequel lesdits moyens (5) d'introduction de l'image du champ d'observation comprennent un dispositif optique (5A) qui capte l'environnement ambiant sous la forme de l'image observée avec le grand angle d'observation, et une caméra de télévision (5B), qui est disposée de manière à être dirigée suivant un axe optique dudit dispositif optique de manière à recevoir l'image observée avec le grand angle d'observation à partir dudit dispositif optique.

3. Dispositif de traitement d'images selon la revendication 2, dans lequel ledit dispositif (5A) est un miroir qui tourne sa convexité vers ladite caméra de télévision (5B).

4. Dispositif de traitement d'images selon la revendication 2, dans lequel ladite caméra de télévision (5B) est installée de manière à être déplaçable par rapport audit dispositif optique.

5. Dispositif de traitement d'images selon la revendication 2, caractérisé en ce que dans ladite caméra de télévision (5B), seule une partie à lentilles de cette caméra est agencée de manière à être déplaçable par rapport audit dispositif optique.

6. Dispositif de traitement d'images selon la revendication 2, dans lequel ladite caméra de télévision possède un foyer variable.

7. Dispositif de traitement d'images selon la revendication 2, dans lequel ledit dispositif (5A) est une lentille grand angulaire extrême.

8. Dispositif de traitement d'images selon la revendication 1, dans lequel lesdits moyens (5) d'introduction de l'image du champ d'observation sont installés sur un objet mobile qui se déplace dans l'environnement, ladite unité arithmétique (6) et lesdits moyens (4) d'affichage de l'image sont installés dans une position qui est distante de l'objet mobile, et lesdits moyens d'introduction de l'image du champ d'observation et ladite unité arithmétique sont accouplés par des moyens de communication (3).

## FIG. 1

## FIG. 2

*FIG. 3*

*FIG. 4*

START

READ THE IMAGE DATA LOCATED AT(r,θ)-ADDRESS OF MEMORY 6A

COMPUTE NEW ADDRESS R BY MEANS OF EQUATION (2)

WRITE THE IMAGE DATA AT (R,θ) ADDRESS OF MEMORY 6B

## FIG. 5

## FIG. 6

## FIG. 7

5A

5B

## FIG. 8

5A

5B

## FIG. 9

## FIG. 10